# EUROPÄISCHE PATENTANMELDUNG

(11) **EP 0 680 215 A2**
(43) Veröffentlichungstag der Anmeldung: **02.11.1995**
(21) Anmeldenummer: 94119928.3
(22) Anmeldetag: 16.12.1994
(51) Int. Cl.: H04N 7/24

(54) **Verfahren zur Aufbereitung und Wiedergewinnung von Daten sowie Anordnungen hierzu**

(30) Priorität: 30.04.1994 DE 4415288
(71) Anmelder: ROBERT BOSCH GMBH, 70442 Stuttgart (DE)
(72) Erfinder: Binder, Jann, D-71546 Aspach (DE); Bambach, Wolfgang, D-71720 Oberstenfeld (DE); Süssmeier, Georg, D-71522 Backnang (DE); Grotz, Karlheinz, D-70734 Fellbach (DE); Krull, Klaus, D-71554 Weissach i.T (DE)

(57) **Zusammenfassung**

Zur Aufbereitung von Daten, wie digitalisierte Fernsehkanalsignale oder -kanalbündel, werden in zumindest einem von N parallelen Teildatenströmen unterschiedlicher Bitwertigkeit Nutzdaten periodisch durch eine Rahmenkennung (F) ersetzt.

Für diesen Ersatz wird ein Teildatenstrom niedriger Bitwertigkeit (LSB) ausgewählt, da dort die Degradation am geringsten ist.

Durch diese Maßnahme muß für die Rahmenkennung die Bitrate nicht erhöht werden. Außerdem ist ein einfacher Aufbau des Multiplexers (N:1 MUX) bzw. Demultiplexers (1:N MUX) an den Übertragungsschnittstellen möglich.

## Beschreibung

Die Erfindung betrifft ein Verfahren zur Aufbereitung von Daten, insbesondere von digitalisierten Fernsehkanalsignalen oder Fernsehkanalsignalbündeln für Übertragungszwecke, sowie ein Verfahren zur Wiedergewinnung solcher Daten und Anordnungen für diese Verfahren.

Zur Übertragung von Daten in Breitbandkommunikationsnetzen werden Quellsignale, z.B. mehrere TV-Kanalsignale, auf der Sendeseite analog/digital gewandelt und zu einem seriellen Datenstrom hoher Bitrate zusammengefügt (DE 40 08 201 A1, DE 41 36 112 A1). Wie aus der DE 41 36 112 A1 hervorgeht, können die Quellsignale in einen Rahmen gemultiplext werden. Auf der Empfangsseite erfolgt dann eine entsprechende Rückwandlung der Nutzsignale.

Aufgabe vorliegender Erfindung ist es ein Verfahren zur Aufbereitung bzw. zur Wiedergewinnung von Daten anzugeben, das eine einfache Synchronisation ermöglicht. Diese Aufgabe wird bezüglich der Aufbereitung durch die Schritte des Anspruchs 1 und bezüglich der Wiedergewinnung durch die Schritte des Anspruchs 3 gelöst. Die Ansprüche 7 und 9 zeigen Anordnungen zur Aufbereitung bzw. zur Wiedergewinnung von Daten auf. Die übrigen Ansprüche beinhalten Ausgestaltungen dieser Verfahren bzw. dieser Anordnungen.

Die Erfindung geht von folgenden Erkenntnissen aus: Liegen Daten in Form von Teildatenströmen mit unterschiedlicher Bitwertigkeit vor, so ist die Degradation am geringsten, wenn nur in einem Teildatenstrom niedriger Bitwertigkeit, z.B. im LSB (lowest significant bit)-Teildatenstrom Fehler im Nutzsignal auftreten. Werden die Teildatenströme mit unterschiedlicher Wertigkeit beispielsweise durch einen A/D-Wandler erzeugt, so nimmt dessen Auflösung mit fallender Bitwertigkeit ab. Dies macht sich die Erfindung zunutze, indem in einem Teildatenstrom niedriger Bitwertigkeit Nutzdaten periodisch durch eine Rahmenkennung ersetzt werden. Im Gegensatz zu herkömmlichen Verfahren bei denen für die Übertragung einer zusätzlichen Rahmenkennung die Bitrate steigt oder ein sehr komplexer Multiplexer bzw. Demultiplexer bei der Wiedergewinnung der Daten erforderlich ist, ermöglicht die Erfindung eine einfache Synchronisation ohne merkliche Qualitätseinbußen. Wird z.B. im Teildatenstrom niedriger Bitwertigkeit jedes 512. Nutzbit durch ein Rahmenkennungsbit ersetzt, so kann im Gegensatz zu einer Lösung, wo zu Vielfachen von 512 Bit ein Rahmenkennungsbit hinzugefügt wird ein einfacher Demultiplexer verwendet werden. Eine Demultiplex-Bildung bis zu Einzelbits mit anschließender Remultiplex-Bildung ist nicht erforderlich. Mit der Erfindung können genormte Datenraten voll ausgenutzt werden. So können z.B. bei der Datenrate von 5.4 GBit 32 TV-Kanäle mit einer Breite von 7 MHz übertragen werden.

Die Erfindung wird nun anhand von Ausführungsbeispielen näher erläutert. Es zeigen
Figur 1 ein Blockschaltbild eines Datenübertragungssystems mit erfindungsgemäßer Aufbereitung und Wiedergewinnung der Daten,
Figur 2 ein Blockschaltbild eines Datenübertragungssystems nach Figur 1 mit Mitteln für die Übertragung von Zusatzdaten,
Figur 3 den Rahmenaufbau für die Datenübertragung,
Figur 4 einen Stromlauf eines sendeseitigen Rahmengenerators und Multiplexers,
Figur 5 einen Stromlauf eines empfangsseitigen Rahmendetektors und Mitteln zur Datenwiedergewinnung.

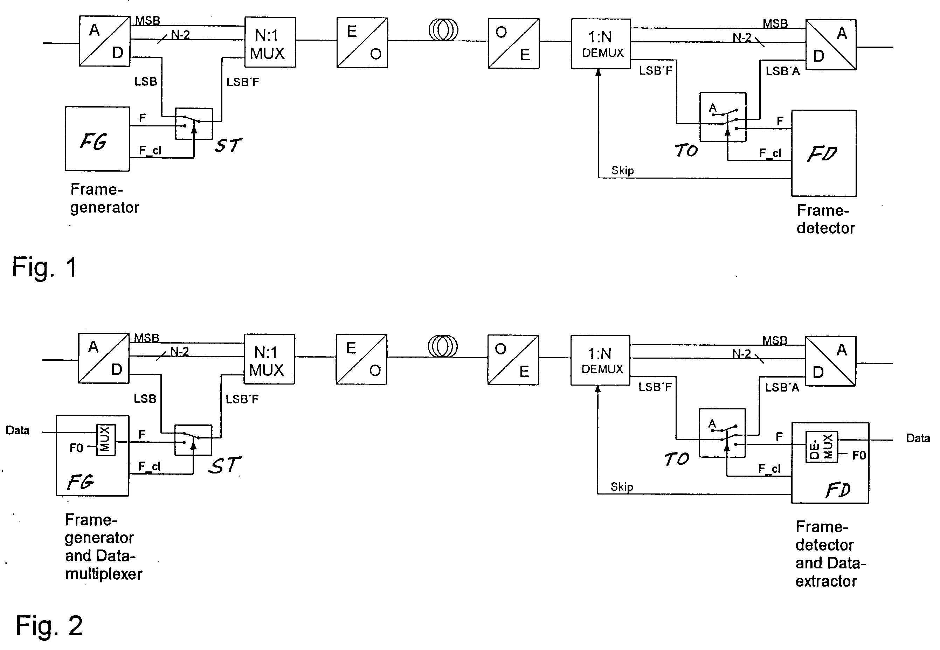

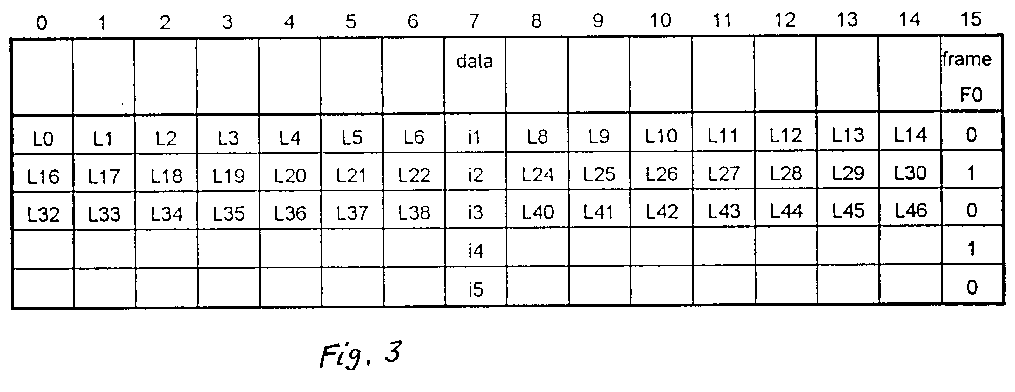

Das Datenübertragungssystem der Erfindung mit sendeseitiger Datenaufbereitung und empfangsseitiger Wiedergewinnung wird anhand der Übertragung von Fernsehkanalsignalen oder ganzen Fernsehkanalsignalbündeln erläutert. Ein angelieferter Fernsehkanal oder ein Fernsehkanalsignalbündel wird, falls es nicht bereits in Form von parallelen digitalen Teildatenströmen unterschiedlicher Bitwertigkeit vorliegt, mittels eines A/D-Wandlers gegebenenfalls nach einer Frequenzumsetzung in eine Frequenzlage, die für die nachfolgende A/D-Wandlung günstig ist in H parallele Teildatenströme unterschiedlicher Bitwertigkeit umgesetzt. Wie Figur 1 zeigt, ist der Teildatenstrom mit der höchsten Bitwertigkeit mit MSB (most significant bit) und der Teildatenstrom mit der niedrigsten Bitwertigkeit mit LSB (least significant bit) bezeichnet. Dazwischen befinden sich N-2 weitere Teildatenströme. Diese parallelen Teildatenströme werden mittels dem Multiplexer N:1 MUX zu einem seriellen Datenstrom zusammengefügt. Zumindest in einem Teildatenstrom niedriger Bitwertigkeit, im vorgestellten Beispiel im LSB Teildatenstrom, werden Nutzdaten periodisch durch eine Rahmenkennung ersetzt. Zu diesem Zweck ist ein Generator FG zur Erzeugung einer solchen Rahmenkennung vorgesehen sowie eine Steuereinheit ST. Gesteuert vom Takt F_cl des Generators FG schaltet die Steuereinheit ST in einer ersten Stellung (Fig. 1) die LSB Signale unverändert durch. In einer zweiten Stellung werden LSB Bits durch die Rahmenkennung F des Rahmengenerators FG periodisch ersetzt. An den Multiplexer N:1 MUX wird somit bezüglich des niedrigwertigsten Teildatenstromes die Datenfolge LSB'F weitergeleitet. Wie der Rahmenaufbau gemäß Figur 3 zeigt, wird jeweils eines von 16 LSBs nämlich L15, L31, L47 usw. durch die Rahmenkennung ersetzt, die in diesem Beispiel eine 0101... Folge , also ein gleichstromfreies Wechselsignal, ist. Jede Folge, die wie beschrieben periodisch in eine Zufallsfolge (Nutzdaten) eingebettet wird, äußert sich als als rauschförmige Störung, die keine Störlinie im Spektrum verursacht. Es ist daher ohne Einschränkung möglich, eine einfache Rahmenkennung zu verwenden. Da die Nutzdaten beim Ersatz durch die Rahmenkennung nur im LSB Teildatenstrom verfälscht werden, ist die Degradation gering wegen der abnehmenden Auflösung bei fallender Bitwertigkeit.

Nach der Zusammenfügung der Teildatenströme zu einem seriellen Datenstrom erfolgt die Übertragung, im Ausführungsbeispiel nach Figur 1 über ein optisches Medium. Nach der elektro-optischen Wandlung E/O schließt sich z.B. eine Glasfaserübertragungsstrecke, bzw. ein optisches Verteilnetz an, mit entsprechender empfangsseitiger Rückwandlung O/E. Beispielsweise können mit einer Bitrate von 5,4 GBit 32 TV-Kanäle mit 7 MHz Bandbreite über ein solches Übertragungs- oder Verteilsystem übertragen werden.

Empfangsseitig ist ein Demultiplexer 1:N DEMUX vorgesehen, der den serialisierten Datenstrom wieder in N parallele Teildatenströme unterschiedlicher Bitwertigkeit zerlegt und gegebenenfalls durch einen D/A-Wandler wieder in analoge TV-Signale zurückwandelt. Diese Zerlegung erfolgt synchron zur Rahmenkennung. Zu diesem Zweck wird die Rahmenkennung mittels eines Rahmenkennungsdetektors FD extrahiert und ein entsprechendes Steuersignal Skip für den Demultiplexer 1:N erzeugt.

In einer Ausgestaltung der Erfindung wird die Rahmenkennung empfangsseitig durch neue Daten ersetzt. Zu diesem Zweck ist eine insbesondere vom Rahmenkennungsdetektor FD gesteuerte Torschaltung TO vorgesehen, die - gesteuert vom Takt F_cl des Rahmenkennungsdetektors FD - die Bitfolge LSB'F an den Stellen L15, L31, L47, ... durch eine Bitsequenz A ersetzt. Diese Bitsequenz A kann beispielsweise aus einem Gleichsignal mit konstantem L-Pegel bestehen. Dieses Gleichsignal führt zu einer geringeren Degradation im Gesamtsignal als das Wechselsignal der Rahmenkennung.

Das Blockschaltbild nach Figur 2 zeigt eine weitere Ausgestaltung der Erfindung. In einen Teildatenstrom mit ebenfalls niedriger Bitwertigkeit, im Ausführungsbeispiel aus Vereinfachungsgründen wiederum der LSB Teildatenstrom, werden weitere Nutzdaten (TV-Signalanteile) durch Zusatzdaten, z.B. Overhead-Informationen, Steuerinformationen, usw., ersetzt. Wie der Rahmenaufbau nach Figur 3 zeigt, werden die Bitplätze L7, L23, L39 usw. durch die Zusatzdaten i1, i2, i3, ... ersetzt. Um diese Zusatzdaten in den LSB Teildatenstrom einzufügen, ist der Generator FG zur Erzeugung der Rahmenkennung mit einem Multiplexer ausgestattet, der jeweils 2 von 16 LSBs zum einen durch die Zusatzdaten i1, i2, i3, ... und zum anderen durch die Rahmenkennung ersetzt. Empfangsseitig ist ein entsprechender Demultiplexer im Rahmenkennungsdetektor FD vorgesehen mittels dessen die Zusatzdaten wieder extrahiert werden können.

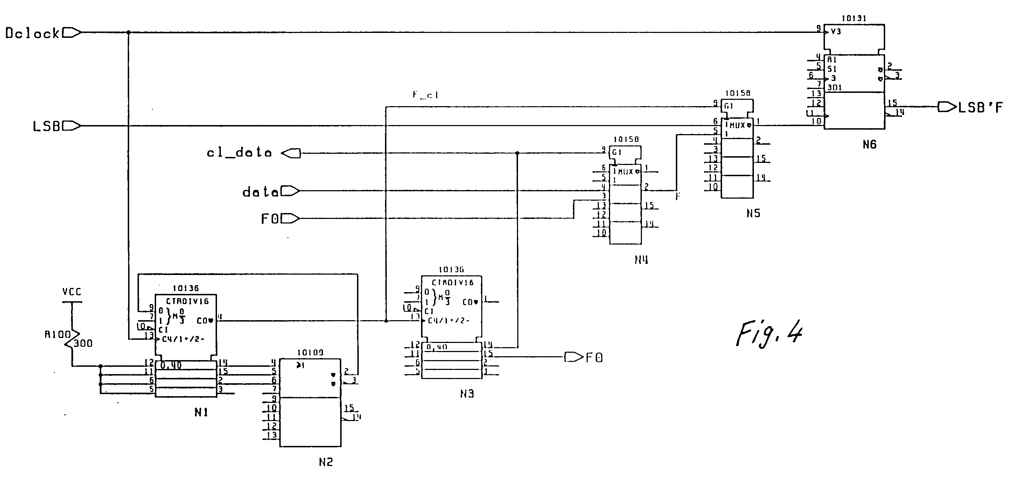

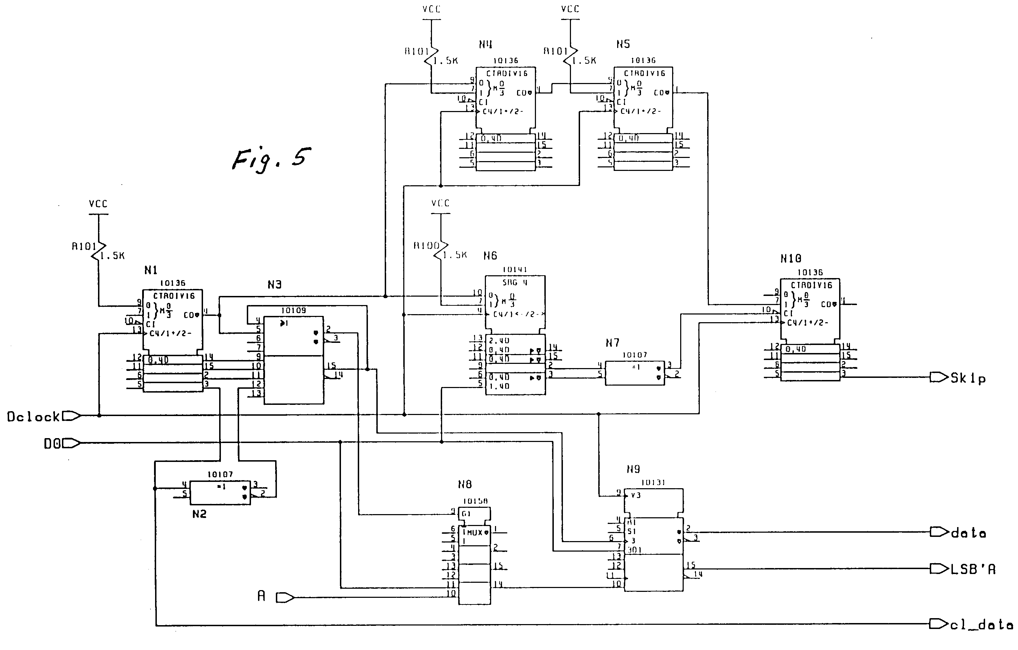

Die Figuren 4 und 5 zeigen mögliche Hardwareausführungen für den Generator FG mit Multiplexer, bzw.
Rahmenkennungsdetektor FD mit Demultiplexer.
Als N:1 MUX gemäß den Figuren 1 und 2 dient bei beispielsweise N=12 Teildatenströmen ein 12:1 Multiplexer VS8001 von "Vitesse Semiconductor Corporation". Die Eingänge für die 12 Teildatenströme dieses Multiplexerbausteins VS8001 sind mit D0 bis D11 bezeichnet, wobei das LSB bei D0 zugeführt wird. Das Taktsignal für D0 bis D11 ist mit D clock bezeichnet. Alle nachfolgend beschriebenen integrierten Baugruppen können aus der Serie Motorola MC10HXXX gewählt werden.

Der 2:1 Multiplexer N4 von Figur 4 wählt abwechselnd ein Zusatzdatenbit und ein Rahmenkennungsbit FO aus. Der nachgeschaltete 2:1 Multiplexer N5 ersetzt jedes achte Bit im LSB Teildatenstrom durch das Ausgangssignal von N4. Die Taktsteuerung von N4 und N5 wird vom D clock Signal abgeleitet unter Zuhilfenahme der Hexadezimalzähler N1 und N3. Der Zähler N1 und das EXOR-Gatter N2 liefern ein um den Faktor 1:8 geteiltes Taktsignal D clock. Das Steuersignal F_cl am Ausgang CO des Zählers N1 ist 'high' während 7 Taktschriften von D clock und 'low' für einen D Clock Taktschritt. Das Steuersignal F_cl steuert den Multiplexer N5. Eine weitere Reduktion der Taktrate um den Faktor 2 unter Verwendung von N3 führt zu einem Schaltsignal für N4. Eine erneute Teilung der Taktrate um den Faktor 2 liefert das Rahmenkennungswort FO. Über das D-Flip-Flop N6 erfolgt eine Verzögerung des LSB Teildatenstromes um einen Taktschritt D clock. Eine ebensolche Verzögerung ist auch für alle anderen dem Multiplexer N:1 MUX zugeführten Daten erforderlich beispielsweise mit entsprechenden D-Flip-Flops. Am Ausgang des D-Flip-Flops N6 erscheint das Signal LSB'F, welches an den Multiplexer N:1 MUX weitergeleitet wird.

Die empfangsseitige Serien-Parallelwandlung wird mit einem 1:N DEMUX nach den Figuren 1 und 2 durchgeführt. Mit N=12 kann beispielsweise der 1:12 Demultiplexer VS8002 von "Vitesse ..." verwendet werden. Die Anschlußbelegung für die Teildatenströme wird wiederum mit D0 bis D11 bezeichnet, wobei der LSB Teildatenstrom am Ausgang D0 erscheint. Dieser Demultiplexer ist mit einem Sprungsteuerungseingang (Skip) ausgestattet zur Triggerung des Demultiplexers derart, daß eine Wortverschiebung um ein Bit bezüglich des serialisierten 5,4 Gbit Datenstromes erfolgen kann. Die Eingangssignale für den Rahmenkennungsdetektor FD sind die Ausgangssignale D0 und D clock des Demultiplexers VS8002. Bei Rahmensynchronisation erscheint am D0 Ausgang das LSB'F Signal. Für den Rahmenkennungsdetektor FD mit zugeordneter Torschaltung TO können wiederum integrierte Baugruppen der Serie Motorola MC10XXX verwendet werden. Der Rahmenkennungsdetektor FD detektiert die Rahmenkennung F0=1010 ..., extrahiert die Zusatzdaten i1, i2, i3, gemäß Figur 3 und liefert das Skip-Signal für den Demultiplexer VS8002 sowie den Takt F_cl für die Torschaltung TO. Der Zähler N1 und die OR-Gatter von N3 erzeugen zwei Takt 'enable' Signale CE_data und CE_F0, die jeweils einmal pro 16 Bit des Teildatenstromes bei D0 'Low' sind. CE_data ist 'Low' bei Bitposition 7; CE_F0 ist 'Low' bei Bitposition 15 (Figur 3). Deshalb erlaubt im Falle der Rahmensynchronisation CE_data die Extraktion der Nutzdaten 'data' unter Verwendung des D-Flip-Flops N9 und CE_F0 dient zur Suche der Rahmenkennungsbits F0 unter Verwendung des Schieberegisters N6:
Wenn das Schieberegister N6 die Rahmenkennungsbits 1010... enthält, führt der Ausgang des EXOR-Gatters N7 ständig 'high' Potential und der Zählerstand des nachgeschalteten Fehlersignalzähler N10 ändert sich nicht. An einem der Ausgänge des Fehlersignalzählers, z.B. Q3, kann das Skip-Signal abgegriffen werden. Der Fehlersignalzähler N10 wird einmal innerhalb von 16 x 64 Taktzyklen von D clock auf den Wert '0000' zurückgesetzt. Das Skip Signal bleibt dann 'low'.

Wenn das Schieberegister N6 Zufallbits enthält, führt der Ausgang des EXOR-Gatter N7 mit einer Wahrscheinlichkeit von 0.5 'low' Potential. Deshalb wird statistisch der Zähler N10 nach jedem zweiten D clock-Taktschritt inkrementiert. Das Ausgangssignal an Q3 - Skip-Signal - ändert nach jeweils 8 Inkrementen sein Vorzeichen und liefert somit Triggerimpulse für den Seriendatenstrom hoher Bitrate, wodurch im Demultiplexer VS8002 eine Wortrotation (Verrücken der Daten um jeweils ein Bit pro Triggerimpuls) erfolgt. Dieser Suchprozeß für die Rahmenkennung wiederholt sich so lange, bis das Schieberegister N6 die korrekte Rahmenkennung gefunden hat und damit Rahmensynchronisation erreicht ist.

Die Maximalzahl an Skips bis eine Rahmensynchronisation erreicht wird beträgt: 16 x 12 = 192 für die zuvor beschriebene Rahmenkennung und den beschriebenen Rahmenkennungsdetektor.

Nach erreichter Synchronisation können Übertragungsfehler falsche Rahmenkennungen vortäuschen. Dies würde zur Inkrementierung des Fehlersignalzählers N10 führen. Zur Vermeidung des Synchronverlusts durch eine allmähliche Akkumulation von vorgetäuschten Rahmenkennungsfehlern wird der Demultiplexer durch das Skip-Signal erst dann neue synchronisiert, wenn die Rahmenkennung mehrmals fehlerhaft empfangen wurde. Aus diesem Grunde wird der Fehlersignalzähler N10 auf den Wert 0000 nur einmal während 16 x 64 D clock Taktschriften zurückgesetzt. Das Signal für diese Rücksetzung wird mittels der Zähler N4 und N5 aus dem D clock Signal abgeleitet.

Für den Ersatz der Rahmenkennung durch Nutzdaten - wechselstromfreie Bitsequenz A auf 'low' Potential, wie zuvor beschrieben - ist der Multiplexer N8 vorgesehen. Die zeitrichtige Einbindung dieser Bitsequenz A (Ausgleich der Verzögerung durch das D-Flip-Flop auf der Sendeseite) wird über das D-Flip-Flop N9 erreicht, welches die Bitfolge LSB'A liefert.

## Patentansprüche

1. Verfahren zur Aufbereitung von Daten, insbesondere von digitalisierten Fernsehkanalsignalen oder Fernsehkanalsignalbündeln für Übertragungszwecke, wobei die Daten, falls sie nicht bereits in Form von parallelen Teildatenströmen unterschiedlicher Bitwertigkeit vorliegen, in solche umgewandelt werden und wobei zumindest in einem Teildatenstrom mit niedriger Bitwertigkeit Nutzdaten periodisch durch eine Rahmenkennung ersetzt werden.

2. Verfahren nach Anspruch 1, dadurch gekennzeichnet, daß die Teildatenströme zu einem seriellen Datenstrom zusammengefügt werden.

3. Verfahren zur Wiedergewinnung von Daten, insbesondere von digitalisierten Fernsehkanalsignalen oder Fernsehkanalsignalbündeln, in Form von parallelen Teildatenströmen unterschiedlicher Bitwertigkeit aus einem seriellen Datenstrom, bei dem Nutzdaten niedriger Bitwertigkeit periodisch durch eine Rahmenkennung (F) ersetzt sind, wobei im seriellen Datenstrom zuerst ein Suchvorgang für das Bitmuster der Rahmenkennung eingeleitet wird und wobei nach dem Auffinden dieses Bitmusters eine Zerlegung in die parallelen Teildatenströme synchron zur gefundenen Rahmenkennung vorgenommen wird.

4. Verfahren nach einem der Ansprüche 1 bis 3, dadurch gekennzeichnet, daß außer den durch eine Rahmenkennung (F) ersetzten Nutzdaten weitere Nutzdaten durch Zusatzdaten (Data) ersetzt werden in zumindest einem Teildatenstrom mit ebenfalls niedriger Bitwertigkeit.

5. Verfahren nach Anspruch 4, dadurch gekennzeichnet, daß die Nutzdaten in zumindest einem Teildatenstrom niedriger Bitwertigkeit abwechselnd periodisch durch Rahmenkennung und Zusatzdaten ersetzt werden.

6. Verfahren nach einem der Ansprüche 1 bis 5, dadurch gekennzeichnet, daß als Rahmenkennung eine periodische Bitfolge verwendet wird.

7. Anordnung zur Aufbereitung von Daten, insbesondere von digitalisierten Fernsehkanalsignalen oder Fernsehkanalsignalbündeln für Übertragungszwecke, mit folgenden Baugruppen:
- einem A/D-Wandler (AD) zur Erzeugung von parallelen Teildatenströmen unterschiedlicher Bitwertigkeit,
- einem Generator (FG) zur Erzeugung einer Rahmenkennung,
- einer Steuereinheit (ST) zum periodischen Ersetzen von Nutzdaten in einem Teildatenstrom niedriger Bitwertigkeit durch die Rahmenkennung.

8. Anordnung nach Anspruch 7, gekennzeichnet durch einen Multiplexer (N:1 MUX) zur Serialisierung der parallelen Teildatenströme.

9. Anordnung zur Wiedergewinnung von Daten, insbesondere von digitalisierten Fernsehkanalsignalen oder Fernsehkanalsignalbündeln für Übertragungszwecke, mit folgenden Baugruppen:
- einem Demultiplexer (1:N DEMUX) zur Zerlegung eines seriellen
Datenstroms in parallele Teildatenströme unterschiedlicher Bitwertigkeit,
- einem Rahmenkennungsdetektor (FD) für eine Rahmenkennung in einem Teildatenstrom niedriger Bitwertigkeit mit Mitteln zur Erzeugung eines Steuersignals (Skip) für den Demultiplexer
(1:N DEMUX), um diesen synchron zur aufgefundenen Rahmenkennung zu betreiben.

10. Anordnung nach Anspruch 9, gekennzeichnet durch eine insbesondere vom Rahmenkennungsdetektor (FD) gesteuerte Torschaltung (TO) zur Überdeckung der Rahmenkennung (F) durch Nutzdaten (A).

11. Anordnung nach Anspruch 7 oder 8, dadurch gekennzeichnet, daß der Generator (FG) mit Mitteln zum Ersatz von Nutzdaten in einem Teildatenstrom niedriger Bitwertigkeit durch Zusatzdaten (Data) ausgestattet ist.

12. Anordnung nach Anspruch 9 oder 10, dadurch gekennzeichnet, daß der Rahmenkennungsdetektor (FD) und gegebenenfalls die Torschaltung (TO) mit Mitteln ausgestattet sind zur Extraktion von Zusatzdaten in einem Teildatenstrom niedriger Bitwertigkeit.

13. Anordnung nach einem der Ansprüche 9 bis 12, dadurch gekennzeichnet, daß die Mittel zur Erzeugung des Steuersignals (Skip) für den Demultiplexer (1:N DEMUX) so ausgebildet sind, daß der Demultiplexer (1:N DEMUX) nach aufgefundener Rahmenkennung erst dann durch das Steuersignal (Skip) neu synchronisiert wird, wenn die Rahmenkennung mehrmals fehlerhaft empfangen wurde.
